# EUROPÄISCHE PATENTANMELDUNG

(11) **EP 4 387 022 A1**
(43) Veröffentlichungstag der Anmeldung: **19.06.2024**
(21) Anmeldenummer: 23193907.5
(22) Anmeldetag: 29.08.2023
(51) Int. Cl.: H02G 5/06, H02G 5/10

(54) **SAMMELSCHIENE, ELEKTRISCHES VERSORGUNGSSYSTEM UND LUFTFAHRZEUG**

(30) Priorität: 14.12.2022 DE 102022133289
(71) Anmelder: Airbus Operations GmbH, 21129 Hamburg (DE)
(72) Erfinder: BENTHIEN, Hermann, 21129 Hamburg (DE); HEGENBART, Matthias, 21129 Hamburg (DE)
(74) Vertreter: Isarpatent

(57) **Zusammenfassung**

Die vorliegende Erfindung schafft eine Sammelschiene (100) mit einer Vielzahl an Leiterschienen (110); und einem Gehäuse (120), welches einen Innenraum (121) umschließt; wobei die Vielzahl an Leiterschienen (110) in dem Innenraum (121) angeordnet ist und einen Hochtemperatur-Supraleiter umfasst. Des Weiteren schafft die vorliegende Erfindung ein elektrisches Versorgungssystem (10) und ein Luftfahrzeug.

## Beschreibung

### TECHNISCHES GEBIET DER ERFINDUNG

Die vorliegende Erfindung betrifft eine Sammelschiene, ein elektrisches Versorgungssystem, sowie ein Luftfahrzeug.

### HINTERGRUND DER ERFINDUNG

In Luftfahrzeugen findet sich eine Vielzahl an elektronischen Komponenten, welche zum einen mit Energie als auch mit Steuersignalen versorgt werden müssen. Hierfür können neben Kabeln auch Sammelschienen verwendet werden.

Aufgrund elektrischer Widerstände erwärmen sich sowohl die Kabel als auch die Sammelschienen, wenn elektrischer Strom durch sie hindurch fließt. Diese Erwärmung kann lokalisiert zu hohen Temperaturen führen, wodurch sichergestellt werden muss, dass durch diese Temperaturen keine Bauteile in der Nähe der elektrischen Leiter benachteiligt werden.

### ZUSAMMENFASSUNG DER ERFINDUNG

Vor diesem Hintergrund liegt der vorliegenden Erfindung die Aufgabe zu Grunde, eine unerwünschte Erwärmung von elektrischen Versorgungssystemen zu vermeiden.

Diese Aufgabe wird gelöst durch eine Sammelschiene mit den Merkmalen des Patentanspruchs 1, ein elektrisches Versorgungssystem mit den Merkmalen des Patentanspruchs 6 sowie durch ein Luftfahrzeug mit den Merkmalen des Patentanspruchs 7.

Dementsprechend ist nach einem ersten Aspekt der Erfindung eine Sammelschiene mit einer Vielzahl an Leiterschienen und einem Gehäuse, welches einen Innenraum umschließt, vorgesehen. Die Vielzahl an Leiterschienen ist in dem Innenraum angeordnet ist und umfasst einen Hochtemperatur-Supraleiter.

Nach einem zweiten Aspekt der Erfindung ist ein elektrisches Versorgungssystem mit einer erfindungsgemäßen Sammelschiene und mindestens einer Stromabnehmereinrichtung vorgesehen.

Nach einem weiteren Aspekt der Erfindung ist ein Luftfahrzeug mit mindestens einer erfindungsgemäßen Sammelschiene oder mindestens einem erfindungsgemäßen elektrischen Versorgungssystem vorgesehen.

Eine der Ideen der vorliegenden Erfindung besteht darin, Hochtemperatur-Supraleiter zu verwenden. Hochtemperatur-Supraleiter weisen supraleitende Eigenschaften bei Temperaturen von weniger als ca. -200°C auf. Diese Temperaturen können bereits mit gängigen Kühlmedien wie etwa flüssigem Stickstoff erreicht werden und ermöglichen somit die Ausnutzung von supraleitenden Eigenschaften außerhalb hochspezialisierter Laborumgebungen. Bei Supraleitern entsteht keinerlei Erwärmung durch elektrischen Widerstand, wodurch ungewünschte Erwärmung der elektrischen Komponenten der Sammelschiene vorteilhaft vermieden wird.

In einem Ausführungsbeispiel umfasst die Sammelschiene weiterhin eine Einleiteinrichtung, welche dazu ausgebildet ist, ein Kühlmedium in den Innenraum einzuleiten. Hierdurch kann aus dem Innenraum entfliehendes Kühlmedium konstant nachgefüllt werden, um die Vielzahl an Leiterschienen kontakt auf der Temperatur der Supraleitung zu halten.

In einem weiteren Ausführungsbeispiel umfasst die Sammelschiene weiterhin eine Kühleinrichtung, welche dazu ausgebildet ist, ein in dem Innenraum befindliches Kühlmedium zu kühlen. Hierdurch kann das Kühlmedium und damit die Vielzahl an Leiterschienen auf der Temperatur der Supraleitung gehalten werden.

In einem weiteren Ausführungsbeispiel der Sammelschiene ist das Gehäuse derart ausgebildet ist, dass der Innenraum abgeschlossen ist. Hierdurch kann vorteilhaft verhindert werden, dass Kühlmedium aus dem Innenraum entfliehen kann.

In einem weiteren Ausführungsbeispiel umfasst die Sammelschiene weiterhin umfassend mindestens eine kontaktlose Kopplungseinrichtung, welche in dem Innenraum angeordnet und dazu ausgebildet ist, elektrische Energie kontaktlos an eine Stromabnehmereinrichtung zu übertragen. Hierdurch kann auch bei einem abgeschlossenen Gebäude vorteilhaft einfach elektrische Energie von der Vielzahl an Leiterschienen zu elektronischen Geräten übertragen werden.

In einem Ausführungsbeispiel des Luftfahrzeugs ist die mindestens eine Sammelschiene mit einem Rumpf, einem Kabinenboden und/oder mindestens einem Flügel des Luftfahrzeugs verbunden. Entlang dieser Strukturelemente eines Luftfahrzeugs sind in der Regel eine Vielzahl von Kabeln und ähnlichem zur Versorgung elektronischer Komponenten vorgesehen, was die Anordnung einer Sammelschiene an diesen Stellen besonders synergistisch vorteilhaft macht.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeugs gemäß eines Ausführungsbeispiels der vorliegenden Erfindung;
- Fig. 2: eine schematische Querschnittsansicht einer Sammelschiene gemäß eines Ausführungsbeispiels der vorliegenden Erfindung;
- Fig. 3a: eine schematische Seitenansicht eines elektrischen Versorgungssystems gemäß eines Ausführungsbeispiels der vorliegenden Erfindung; und
- Fig. 3b: eine schematische Querschnittansicht des elektrischen Versorgungssystems gemäß des Ausführungsbeispiels in Fig. 3a.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

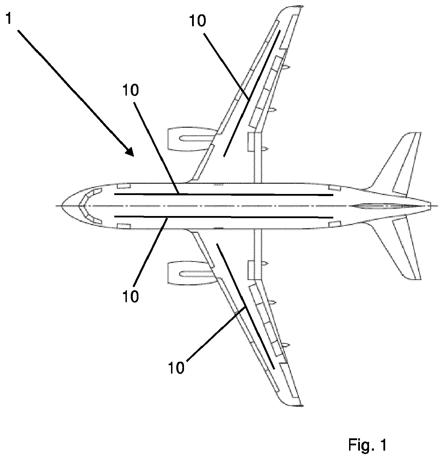

Fig. 1 zeigt eine schematische Darstellung eines Luftfahrzeugs 1 gemäß eines Ausführungsbeispiels der vorliegenden Erfindung.

Das in Figur 1 gezeigte Luftfahrzeug 1 weist eine Vielzahl von elektrischen Versorgungssystemen 10 auf, von denen insgesamt vier gezeigt sind. Zwei elektrische Versorgungssysteme 10 verlaufen hierbei entlang des Rumpfes des Luftfahrzeugs 1 und jeweils ein elektrisches Versorgungssystem 10 verläuft längs jedes der Flügel des Luftfahrzeugs 1.

Die Positionen der in Figur 1 gezeigten elektrischen Versorgungssysteme 10 deuten an, an welchen Stellen in einem Luftfahrzeug beispielsweise elektrische Leitungen angeordnet sein können. An diesen Stellen können also auch erfindungsgemäße elektrische Versorgungssysteme Anwendung finden um die im allgemeinen Teil beschriebenen synergistischen Effekte der vorliegenden Erfindung bestmöglich nutzen zu können.

Bei dem in Figur 1 gezeigten Luftfahrzeug sind elektrische Versorgungssysteme 10 genannt. Es ist allerdings auch denkbar, dass ein Luftfahrzeug 1 lediglich erfindungsgemäße Sammelschienen aufweist, falls etwa durch das Hinzufügen von Stromabnehmereinrichtungen, die Bauteile erst nachträglich zu elektrischen Versorgungssystemen ergänzt werden sollen.

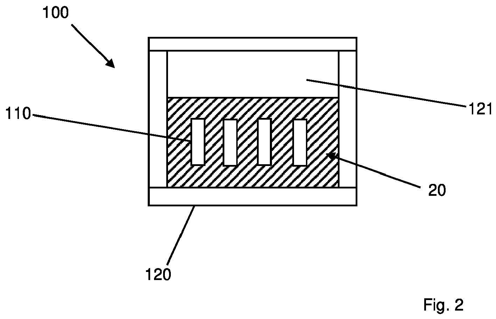

Fig. 2 zeigt eine schematische Querschnittsansicht einer Sammelschiene 100 gemäß eines Ausführungsbeispiels der vorliegenden Erfindung.

Die Sammelschiene 100 weist eine Vielzahl an Leiterschienen 110 und ein Gehäuse 120 auf.

Das Gehäuse 120 umschließt in dem gezeigten Ausführungsbeispiel einen Innenraum 121, in welchem die Vielzahl an Leiterschienen 110 angeordnet ist.

Die Vielzahl an Leiterschienen 110 umfasst einen Hochtemperatur-Supraleiter und ist in einem Kühlmedium 20 eingebettet. Durch das Kühlmedium 20 wird die Vielzahl an Leiterschienen 110 auf eine Temperatur gebracht, an welcher die Leiterschienen 110 supraleitende Eigenschaften entwickeln. In diesem Zustand entsteht keine Widerstandswärme durch fließende Ströme und eine Erwärmung der Sammelschiene 100 als Ganzes wird vermieden.

Als Kühlmedium 20 kann etwa flüssiger Stickstoff verwendet werden. Das Gehäuse 120 weist in dem gezeigten Ausführungsbeispiel eine Vielzahl an Öffnungen auf, durch welche jede der Vielzahl an Leiterschienen 110 kontaktiert werden kann. Aus diesen Öffnungen kann zwar unter Umständen Kühlmedium 20 aus dem Innenraum 121 entfliehen, dies kann allerdings unter Umständen sogar vorteilhaft sein, da durch den dabei entstehenden Verdunstungseffekt, die Temperatur des Kühlmediums 20 noch weiter abgesenkt werden kann.

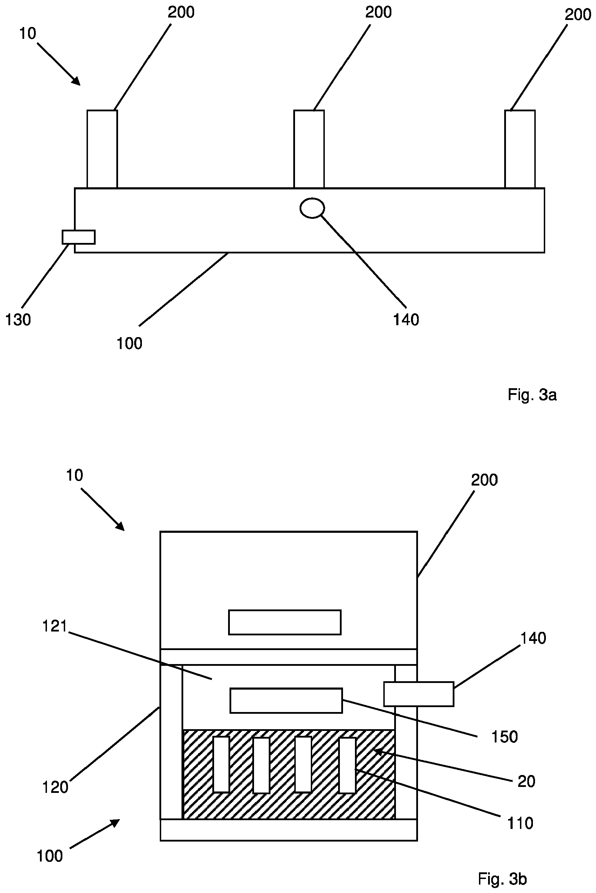

Fig. 3a und 3b zeigen schematische Darstellungen eines elektrischen Versorgungssystems 10 gemäß eines Ausführungsbeispiels der vorliegenden Erfindung, wobei Fig. 3a eine Seitenansicht und Fig. 3b eine Querschnittsansicht des elektrischen Versorgungssystems 10 zeigt.

Das elektrische Versorgungssystem 10 weist eine Sammelschiene 100 und eine Vielzahl an Stromabnehmereinrichtungen 200 auf. In dem hier gezeigten Ausführungsbeispiel sind insgesamt drei Stromabnehmereinrichtungen 200 vorgesehen, zwei Stromabnehmereinrichtungen 200 jeweils an den Enden der Sammelschiene 100 und eine Stromabnehmereinrichtung 200 an einer zentralen Stelle.

Die Sammelschiene 100 weist eine Vielzahl an Leiterschienen 110, ein Gehäuse 120, eine Einleiteinrichtung 130, eine Kühleinrichtung 140, sowie mindestens eine kontaktlose Kopplungseinrichtung 150 auf. Das Gehäuse 120 umschließt in dem gezeigten Ausführungsbeispiel einen abgeschlossenen Innenraum 121, in welchem die Vielzahl an Leiterschienen 110 und die mindestens eine kontaktlose Kopplungseinrichtung 150 angeordnet sind. Die Vielzahl an Leiterschienen 110 umfasst einen Hochtemperatur-Supraleiter und ist in einem Kühlmedium 20 eingebettet.

Die Einleiteinrichtung 130 ist an einem Ende der Sammelschiene 100 angeordnet und dazu ausgebildet, Kühlmedium 20 in den Innenraum 121 einzuleiten. Auch wenn der Innenraum 121 abgeschlossen ausgebildet ist, kann es vorkommen, dass Kühlmedium, welches in eine Gasphase übergangen ist, durch mikroskopische Öffnungen in dem Gehäuse entweichen kann. Insofern kann auch bei dem in den Fig. 3a und 3b gezeigten Ausführungsbeispiel die Notwendigkeit bestehen, Kühlmedium 20 nachzufüllen. Mithilfe einer Einleiteinrichtung 130 kann dies konstant erfolgen, da die in diesem Ausführungsbeispiel nachzufüllende Menge an Kühlmedium 20 gering ist.

Die Kühleinrichtung 140 ist an einer Seite der Sammelschiene 100 in räumlicher Nähe zu einer kontaktlosen Kopplungseinrichtung 150 angeordnet. An dieser Stelle kann die Kühleinrichtung 140 das Kühlmedium 20 gezielt an einer Stelle abkühlen an welcher, durch die kontaktlose Kopplungseinrichtung 150 lokalisiert mehr Wärme entstehen kann als an anderen Stellen. Vorteilhafter Weise ist zu jeder kontaktlosen Kopplungseinrichtung 150 eine Kühleinrichtung 140 vorgesehen. Alternativ oder zusätzlich können auch noch an anderen Stellen der Sammelschiene Kühleinrichtungen 140 vorgesehen sein.

In den Fig. 3a und 3b wird nicht explizit gezeigt, wie die Stromabnehmereinrichtungen 200 mit der Sammelschiene 100 verbunden sind, da es hierfür eine große Vielzahl an Möglichkeiten gibt. So können etwa Schrauben, Nieten oder Klebmittel für die Befestigung verwendet werden. Auch sind Steckverbindungen denkbar.

In dem gezeigten Ausführungsbeispiel umfassen die mindestens eine kontaktlose Kopplungseinrichtung 150 sowie die Stromabnehmereinrichtungen 200 komplementäre Transmissionsspulen. Die mindestens eine kontaktlosen Kopplungseinrichtung 150 ist mit der Vielzahl an Leiterschienen 110 verbunden, wobei diese Verbindungen aus Gründen der Übersichtlichkeit nicht gezeigt sind. Über diese Verbindungen kann die mindestens eine kontaktlose Kopplungseinrichtung 150 einen elektromagnetischen Schwingkreis betreiben. Hierdurch wird in der Transmissionsspule ein variables Magnetfeld aufgebaut, welches wiederum in der entsprechenden Transmissionsspule der zugehörigen Stromabnehmereinrichtung 200 einen Wechselstrom induziert. Mit diesem Wechselstrom können dann mit der Stromabnehmereinrichtung verbundene elektronische Geräte betrieben werden. Für die Transmissionsspulen der kontaktlosen Kopplungseinrichtungen 150 sowie der Stromabnehmereinrichtungen 200 können ebenfalls Hochtemperatur-Supraleiter verwendet werden, um eine lokalisiert erhöhte Erzeugung von Wärme zu vermeiden.

Generell sollte zumindest für jede der Stromabnehmereinrichtungen 200 eine kontaktlose Kopplungseinrichtung 150 vorgesehen sein. Es können allerdings auch mehr kontaktlose Kopplungseinrichtungen 150 vorgesehen sein, so dass die Positionen der Stromabnehmereinrichtungen erst bei Zusammenfügen des elektrischen Versorgungssystems 10 gewählt werden müssen.

Generell können die Leiterschienen einer Sammelschiene innerhalb des Gehäuses in einem Isolatormaterial eingebettet sein, insbesondere wenn das Gehäuse selbst zumindest teilweise aus einem leitenden Material gefertigt ist oder ein solches beinhaltet. In der vorliegenden Erfindung kann diese Funktion auch durch das Kühlmedium erfolgen, da etwa beispielsweise flüssiger Stickstoff als nichtleitendes Material sowohl zur Kühlung als auch zur elektrischen Isolation der Leiterschienen verwendet werden kann. Lediglich aus Gründen der Übersichtlichkeit ist in den Figuren kein solches Isolatormaterial abgebildet.

In dieser Anmeldung wurde die vorliegende Erfindung im Kontext eines Luftfahrzeuges beschreiben. Die hier beschriebenen Bauteile und Datenübertragungssysteme lassen sich jedoch in allen Bereichen einsetzen. In welchen strukturfestigende Bauteile und Datenübertragungsleitungen vorgesehen werden, insbesondere in allen Arten von Land-, Wasser- und Raumfahrzeugen.

### BEZUGSZEICHENLISTE

- 1: Luftfahrzeug
- 10: Elektrisches Versorgungssystem
- 20: Kühlmedium
- 100: Sammelschiene
- 110: Leiterschiene
- 120: Gehäuse
- 121: Innenraum
- 130: Einleiteinrichtung
- 140: Kühleinrichtung
- 150: kontaktlose Kopplungseinrichtung
- 200: Stromabnehmereinrichtung

## Patentansprüche

1. Sammelschiene (100) mit
einer Vielzahl an Leiterschienen (110); und
einem Gehäuse (120), welches einen Innenraum (121) umschließt;
wobei die Vielzahl an Leiterschienen (110) in dem Innenraum (121) angeordnet ist und einen Hochtemperatur-Supraleiter umfasst.

2. Sammelschiene (100) nach Anspruch 1, weiterhin umfassend eine Einleiteinrichtung (130), welche dazu ausgebildet ist, ein Kühlmedium (20) in den Innenraum (121) einzuleiten.

3. Sammelschiene (100) nach einem der Ansprüche 1 oder 2, weiterhin umfassend eine Kühleinrichtung (140), welche dazu ausgebildet ist, ein in dem Innenraum (121) befindliches Kühlmedium (20) zu kühlen.

4. Sammelschiene (100) nach einem der Ansprüche 1 bis 3, wobei das Gehäuse (120) derart ausgebildet ist, dass der Innenraum (121) abgeschlossen ist.

5. Sammelschiene (100) nach Anspruch 4, weiterhin umfassend mindestens eine kontaktlose Kopplungseinrichtung (150), welche in dem Innenraum (121) angeordnet und dazu ausgebildet ist, elektrische Energie kontaktlos an eine Stromabnehmereinrichtung (200) zu übertragen.

6. Elektrisches Versorgungssystem (10) mit einer Sammelschiene (100) nach einem der Ansprüche 1 bis 5 und mindestens einer Stromabnehmereinrichtung (200).

7. Luftfahrzeug (1) mit mindestens einer Sammelschiene (100) nach einem der Ansprüche 1 bis 5 oder mindestens einem elektrischen Versorgungssystem (10) nach Anspruch 6.

8. Luftfahrzeug (1) nach Anspruch 7, wobei die mindestens eine Sammelschiene (100) mit einem Rumpf, einem Kabinenboden und/oder mindestens einem Flügel des Luftfahrzeugs verbunden ist.
